# EUROPÄISCHE PATENTSCHRIFT

(11) **EP 3 181 021 B1**
(45) Veröffentlichungstag und Bekanntmachung des Hinweises auf die Patenterteilung: **20.03.2024**
(21) Anmeldenummer: 16200181.2
(22) Anmeldetag: 23.11.2016
(51) Int. Cl.: A47J 31/44

(54) **VERFAHREN UND VORRICHTUNG ZUM ERZEUGEN VON MILCHSCHAUM**
DEVICE AND METHOD FOR CREATING MILK FOAM
DISPOSITIF ET PROCÉDÉ DE PRODUCTION DE MOUSSE DE LAIT

(30) Priorität: 15.12.2015 CH 18532015
(43) Veröffentlichungstag der Anmeldung: 21.06.2017
(73) Patentinhaber: Steiner AG Weggis, 6353 Weggis (CH)
(72) Erfinder: STEINER, Adrian, 6353 Weggis (CH)
(74) Vertreter: Luchs, Willi

(56) Entgegenhaltungen:
- EP-A1- 2 534 986
- DE-A1-102011 102 734
- US-A1- 2013 145 936

## Beschreibung

Die Erfindung betrifft ein Verfahren zum Erzeugen von Milchschaum nach dem Oberbegriff des Anspruchs 1 sowie einer Vorrichtung nach Anspruch 11.

Bei einer gattungsmässigen Einrichtung einer Kaffeemaschine gemäss der Druckschrift EP-A-2 120 656 B1 können sowohl kalte und warme Milchgetränke als auch kalter und warmer Milchschaum für milchschaumhaltige Getränke, wie Cappuccino, Latte Macchiatto, Milchkaffee oder Schokoladengetränke erzeugt werden.

Eine derartige Kaffeemaschine muss hinsichtlich der Produktequalität stets hohen Anforderungen genügen, obwohl ihre Einsatz- und Betriebsbedingungen oft variieren. Für die Qualität des erzeugten Milchschaums spielt beispielsweise der jeweils herrschende Atmosphärendruck eine wichtige Rolle, weil je nach Standort der Kaffeemaschine, ob auf einem Berg oder auf Meereshöhe, die Luftzufuhrmenge aufgrund des unterschiedlichen Luftdruckes beeinflusst wird. Weitere Faktoren sind auch die Temperatur und/oder Beschaffenheit der verwendeten Milchsorte.

Bei den bisher bekannten Kaffeemaschinen der eingangs genannten Art, kann die Luftzufuhrmenge zwar von Hand mit einer Drossel oder dergleichen Mitteln eingestellt werden. Die einmal eingestellte Luftmenge ist aber dann im Betrieb den obengenannten Störfaktoren ausgesetzt, die unbeabsichtigte Schwankungen der angesaugten Luftmenge verursachen und folglich die Qualität des Milchschaums sich verändern und ungenügend sein kann.

Eine Vorrichtung gemäss der Druckschrift EP-A-2 534 986 offenbart eine Steuerungseinrichtung, welche derart ausgebildet ist, dass eine gewünschte Getränkeprodukttemperatur, Schaumtemperatur und/oder Schaumkonsistenz vorgebbar ist und das Steuern in Abhängigkeit der vorgegebenen Parametern einprogrammiert sein kann. Es können dabei das Luftabsperrelement und/oder das Dampfabsperrelement getrennt voneinander durch die Steuereinrichtung ansteuerbar sein, um verschiedene Temperaturen bzw. Schaumkonsistenzen erzeugen zu können.

Gemäss der Druckschrift DE-A-10 2011 102 734 ist eine Vorrichtung zum Aufschäumen einer Flüssigkeit erläutert, insbesondere von kalter bzw. noch nicht erhitzter Milch, mit einer Flüssigkeitszuleitung, einer in diese mündenden Luftzuleitung und einer stromabwärts der Mündung der Luftzuleitung in die Flüssigkeitszuleitung ausgebildeten Ableitung zum Abführen des Gemisches aus Flüssigkeit und Luft. Durch die beiden Fördereinheiten kann bei entsprechender Steuerung des Verhältnisses der Förderleistungen die Konsistenz des erzeugten Schaums verändert werden.

Bei diesen Vorrichtungen wird die Konsistenz des Milchschaums insbesondere auf vorgegebene Einstellungen gesteuert. Es sind keine konkreten Regelungen offenbart, bei welchen anhand von Soll- und Istwerten reguliert wird. Damit kann nur durch einen Benutzer die effektiv ausgegebene Milchschaum-Konsistenz festgestellt werden, wenn diese von dem eingestellten Wert abweicht. Es muss dann auch eine manuelle Umsteuerung der Vorrichtung durchgeführt werden.

Der Erfindung liegt die Aufgabe zugrunde, diese Nachteile zu vermeiden und ein Verfahren der eingangs genannten Art zu schaffen, das auch bei variablen Einsatz- und Betriebsbedingungen eine konstant einwandfreie Qualität des erzeugten Milchschaums gewährleistet.

Diese Aufgabe ist erfindungsgemäss durch das Verfahren nach den Merkmalen des Anspruchs 1 bzw. durch die Vorrichtung nach Anspruch 11 gelöst.

Durch diese erfindungsgemässe Ermittlung der Konsistenz des erzeugten Milchschaums und der Kontrolle derselben durch einen Regelvorgang und/oder durch eine Einstellung der Konsistenz kann zum einen die Qualität des Milchschaums bei den sich ändernden Betriebsbedingungen stets optimal gehalten und seine Konsistenz wunschgemäss eingestellt werden.

Beim Regelvorgang wird diese Konsistenz des erzeugten Milchschaums ermittelt und bei Abweichung von einem Sollwert insbesondere durch eine Steuerung der Luftzufuhrmenge verändert, so dass diese Konsistenz stets annähernd dem Sollwert entspricht.

Die Erfindung sieht ferner vor, dass der Sollwert der Luftzufuhrmenge in Abhängigkeit von der Temperatur und/oder Konsistenz des zu erzeugenden Milchschaums einstellbar ist. Das ermöglicht die genaue Regulierung der Luftmenge sowohl bei kalten als auch bei heissen schaumenthaltenden Getränken. Das gilt auch für die Zubereitung der Getränke mit unterschiedlichen Schaumkonsistenzen.

Die Erfindung sieht weiterhin vor, dass der Sollwert der Luftzufuhrmenge auch in Abhängigkeit von der verwendeten Milchsorte und/oder vom Füllstand des Milchvorratsbehälters einstellbar ist. Das ermöglicht etwa für uperisierte Milch, Vollmilch oder Magermilch jeweils spezifische Einstellungen. Entsprechendes gilt auch für den Betrieb bei vollem oder bei fast leerem Milchbehälter.

Die erfindungsgemässe Vorrichtung besteht aus weitgehend standardisierten Bauteilen, die wenig Platz in Anspruch nehmen und leicht in neue und gebrauchte Kaffeemaschinen einbaubar sind. Die Vorrichtung ist auch leicht ausbaufähig und somit in unterschiedlichen Maschinentypen einsetzbar.

Sehr vorteilhaft ist mindestens ein die Konsistenz ermittelnder Sensor als Istwertgeber für einen Regelkreis vorgesehen, wobei dies durch eine kapazitive Messung oder einer elektrischen Widerstandsmessung erfolgen kann.

Die Erfindung sieht ferner vor, dass der Sollwertgeber der Luftmengenregulierung durch ein die Milchschaumbeheizung steuerndes Ventil und/oder durch den Stromverbrauch der Pumpe als Mass für die Konsistenz des Milchschaums verstellbar ist. Auf diese Weise ist die Luftmengenregelung sowohl für kalte als auch für warme Getränke wirksam, unabhängig von der Art des herzustellenden Getränks und des jeweils geeigneten Konsistenzgrades des Milchschaums.

Die erfindungsgemässe Vorrichtung kann auch mit einem Regelkreis für die Strommenge der Pumpe versehen sein, wobei durch diese unterschiedliche Strommenge ein Rückschluss auf die Milchschaumkonsistenz gezogen werden kann.

Zum Einstellen des Sollwertgebers kann auch der Milchvorratsbehälter mit einer mit ihm in Wirkverbindung stehenden Milchsortenanzeige und/oder einer Füllstandanzeige und/oder einer Temperaturanzeige versehen sein. Dadurch kann die Luftzufuhrmenge entsprechend der verwendeten Milchsorte und/oder dem Füllstand des Milchbehälters geregelt werden.

Bei Kaffeemaschinen, die mit einer den Mahlgrad selbsttätig regulierenden Kaffeemühle versehen sind, ist es im Sinne einer optimierten Produktqualität je nach Bedarf zweckmässig, bei der Einstellung des Sollwertgebers auch den Mahlgrad des Kaffees zu berücksichtigen.

Die Erfindung wird nachfolgend anhand eines Ausführungsbeispiels unter Bezugnahme auf die Zeichnung näher beschrieben. Es zeigt:

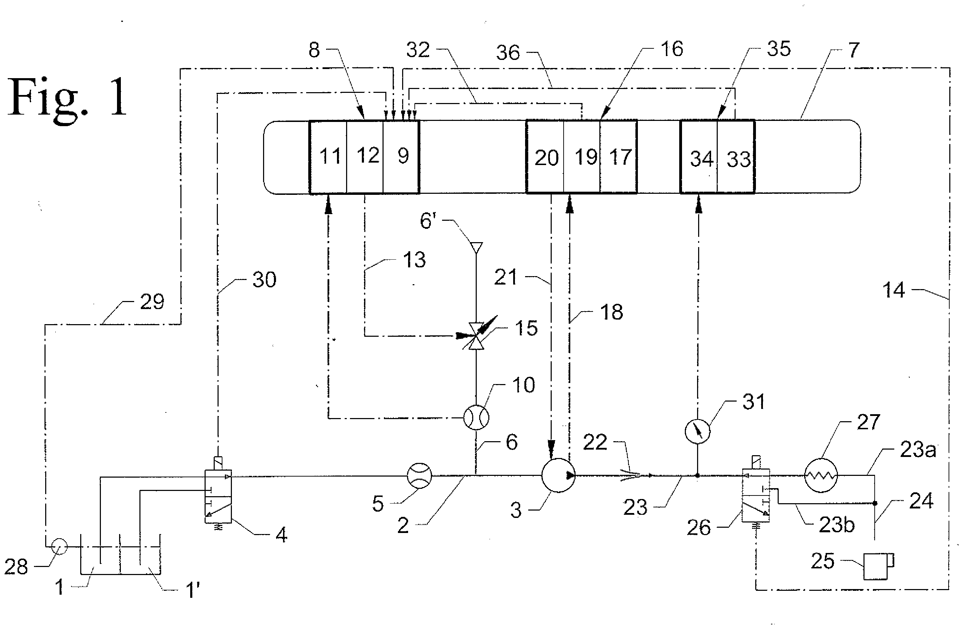

Fig.1 zeigt ein Schema einer erfindungsgemässen Vorrichtung zur Erzeugung von Milchschaum und/oder milchschaumhaltigen Getränken.

Die Vorrichtung gemäss Fig. 1 weist einen oder mehrere Milchbehälter 1, 1' auf, aus denen kalte Milch über eine Ansaugleitung 2 mittels einer Pumpe 3 angesaugt wird. Die Milchbehälter 1, 1' sind wahlweise an die Ansaugleitung 2 über ein Wegeventil 4 anschliessbar. Sie können unterschiedlich geartete Milchsorten, wie uperisierte Milch, Vollmilch oder Magermilch sowie auch Milch mit Zusätzen wie Schokolade, Vanille, etc. enthalten. In der Ansaugleitung 2 befindet sich auch vorzugsweise ein Messgerät 5, mit dem die Durchflussmenge der von der Pumpe 3 angesaugten Milch gemessen werden kann.

Diese Vorrichtung kann als separate Einheit gebaut sein. Sie kann aber vorteilhaft auch als Bestandteil einer handelsüblichen Kaffeemaschine sein.

Zur Erzeugung des Milchschaums wird der Milch über eine in die Ansaugleitung 2 mündende Luftzufuhrleitung 6 mit einem Lufteinlass 6' eine bestimmte Menge Luft oder ein vergleichbares Gasmedium beigemischt. Selbstverständlich kann die Luftzufuhr für den Auslass auch unterbunden werden, um nur heisse oder kalte Milch ohne Schaumerzeugung auszulassen.

Die Pumpe 3 ist ihrerseits mit einem in der Vorrichtung integrierten Drehzahlregler ausgestattet, der sich aus einem Sollwertgeber 17, einem über die Motorenstromleitung 21 betätigten Istwertgeber 20 sowie einem die Abweichung des Istwerts vom Sollwert ermittelnden Signalgeber 19 via die Leitung 18 und dem gegebenenfalls erfolgenden Nachstellen der Pumpendrehzahl über die Leitung 21 zusammensetzt.

In der Ansaugleitung 2 für die Milch und gegebenenfalls Luft befindet sich unmittelbar nach der Pumpe 3 oder nach einem Leitungsabschnitt eine Drosselstelle 22, bei der es sich um ein Drosselventil oder eine Düse handeln kann, dessen Durchlassöffnung zunächst verjüngt und anschliessend ausgedehnt ist. Sie unterstützt dabei die Umwandlung des zugeführten Milch/Luft-Gemisches in Milchschaum. Diese Drosselstelle 22 könnte auch unmittelbar an die Pumpe 3 anschliessen.

Anschliessend an die zur Pumpe 3 führenden Ansaugleitung 2 folgt eine Leitung 23, an welche eine als Rohr oder Schlauch vorgesehene Auslassleitung 24, die vorzugsweise eine Länge von bis zu 30 cm aufweist, damit der Milchschaum sich in dieser Leitung weiterbildet und sich soweit festigen kann, dass ein hochwertiger und in seiner Konsistenz konstant bleibender Schaum entsteht, wenn er beispielsweise in eine Tasse 25 geführt wird.

Die Vorrichtung ermöglicht die wahlweise Erzeugung von kaltem und warmem Milchschaum, indem die Leitung 23 zwei wahlweise über ein Wegeventil 26 einschaltbare Parallelabschnitte 23a, 23b aufweist, wobei der Leitungsabschnitt 23a mit einem Durchlauferhitzer 27 versehen ist. Wird der Milchschaum durch den Leitungsabschnitt 23a hindurchgeleitet, ergibt sich in der Auslassleitung 24 warmer Milchschaum oder ein warmes schaumhaltiges Getränk. Anderenfalls wird der Milchschaum direkt über den Leitungsabschnitt 23b in die Auslassleitung 24 weitergeführt und kann dort als kalter Milchschaum oder kaltes schaumhaltiges Getränk entnommen werden. Diese könnte auch unmittelbar an die Pumpe 3 anschliessen. Ferner könnten bei diesen Parallelabschnitten 23a, 23b je eine Drosselstelle 22 vorhanden sein.

Erfindungsgemäss wird der erzeugte Milchschaum durch einen Regelvorgang mit einer Ermittlung seiner Konsistenz kontrolliert oder durch eine Einstellung seiner Konsistenz verändert.

Beim Regelvorgang wird diese Konsistenz des erzeugten Milchschaums ermittelt und bei Abweichung von einem Sollwert insbesondere durch eine Steuerung der Luftzufuhrmenge verändert, so dass diese Konsistenz stets annähernd dem Sollwert entspricht. Dazu ist ein die Konsistenz ermittelnder Sensor 31 als Istwertgeber für einen Regelkreis 35 mit einem Sollwertgeber 33 vorgesehen, welcher mit dem Sollwertgeber 9 bzw. dem Regelkreis 8 des Luftmengenreglers verbunden ist.

Der jeweilige Sensor 31 ist derart ausgebildet, dass mit ihm die Konsistenz durch Messen elektrischer Eigenschaften des Milchschaums beim Durchfliessen durch eine Leitung 23 vor dem Auslass 24 ermittelbar ist. Dies kann durch eine kapazitive Messung oder eine Widerstandsmessung erfolgen, bei welcher sich der elektrische Widerstand aufgrund der unterschiedlichen Menge der im Schaum enthaltenden Luftbläschen verändert.

Zusätzlich oder alternativ kann vorgesehen sein, dass die Konsistenz des Milchschaums durch Messen des Stromverbrauchs der Pumpe 3 ermittelt wird, wobei dies bei gleicher Drehzahl gemäss der oben erläuterten Regelung der Pumpe 3 erfolgt. Bei steigender cremiger Konsistenz erhöht sich der Förderwiderstand der Milch und damit der Stromverbrauch der Pumpe 3, und umgekehrt reduziert sich dieser Widerstand bei höherem Flüssigkeitsanteil des Milchschaums. Zweckmässigerweise ist in der Pumpe 3 ein via die Leitung 18 mit dem Regelkreis 16 verbundener Sensor bzw. Messmittel für das Messen des Stromverbrauchs integriert. Abweichungen vom Sollwert werden dann via die Leitung 32 zum Sollwertgeber 9 der Luftmengenregelung zugeführt, so dass mit dieser Messung des Stromverbrauchs der Pumpe eine zuverlässige Grösse für die Erzielung einer optimalen Konsistenz des Milchschaums ermöglicht wird.

Im Rahmen der Erfindung kann die Konsistenz des erzeugten Milchschaums auch auf unterschiedliche Werte mit oder ohne die oben erläuterte Regelung eingestellt werden, indem bei der Steuerung 7 eine Schaltung vorgesehen ist, bei der zum Beispiel zwei unterschiedliche Konsistenzen wählbar sind, die eine für Cappuccino und die andere für die Erstellung eines graphischen Musters auf der Oberfläche des eingelassenen Getränks, bei dem zum Beispiel die Form eines Herzes, einer Blume, einer Pflanze oder dergleichen gezeichnet wird.

Bei einem automatisierten Betrieb bei einer Kaffeemaschine kann diese Einstellung vom einen auf den andern Wert der Konsistenz auch automatisch erfolgen, je nachdem, welches Getränk gewählt worden ist.

Als weiterer Vorteil kann mit diesem Sensor 31 oder mit einem zusätzlichen Sensor ausserdem die Wasserhärte und/oder die Konzentration des Reinigungsmittels beim Reinigungsprozess der Vorrichtung detektiert werden. Damit liesse sich durch eine nicht näher erläuterte Regelung die Menge des Reinigungsmittels einstellen bzw. Funktionsstörungen bei der Reinigung eruieren und anzeigen. Der Sensor würde dabei wiederum auf der Basis einer kapazitiven oder einer Messung des elektrischen Widerstandes der Flüssigkeit funktionieren.

Die beigefügte Luftmenge ist massgeblich für die Qualität des Milchschaums bzw. des milchschaumhaltigen Getränks. Damit sie im Betrieb unabhängig von variablen Faktoren, wie beispielsweise der Atmosphärendruck stets optimal bleibt, weist die Vorrichtung einen in der Steuerung 7 der Kaffeemaschine integrierten Luftmengenregler 8 auf, der sich aus einem selbsttätig einstellbaren Sollwertgeber 9, einem Flussmengen-Messgerät 10, einem Istwertgeber 11, einem Signalgeber 12 (der die Abweichung des Istwerts vom Sollwert signalisiert), einem von ihm über die Leitung 13 gesteuerten Proportional- oder Drosselventil 15 als Regelorgan zum Schliessen und Öffnen der Luftzufuhrleitung 6 zusammensetzt.

Das Proportionalventil 15 hat den Vorteil, dass es eine besonders feinfühlige Luftmengenregelung ermöglicht. Im Rahmen der Erfindung ist es aber selbstverständlich ebenfalls möglich, als Regelorgan andere vergleichbar arbeitende Ventile bzw. sogenannte Aktuatoren zu verwenden.

Die Einstellung des Sollwertgebers 9 für den Luftmengenregler 8 erfolgt selbsttätig unter Einbeziehung der massgeblichen Parameter, welche beim beschriebenen Ausführungsbeispiel einerseits die Milchsorte und/oder der Füllstand sowie die Temperatur des jeweils in Betrieb befindlichen Milchbehälters 1 oder 1'. Hierfür sind in diesen entsprechende Anzeigeelemente 28 vorgesehen, die auf den Sollwertgeber 9 über die Leitung 29 wirksam sind.

Die Zuordnung der Sollwerteinstellung zu den einzelnen Behältern erfolgt über die Leitung 30, über welche die jeweilige Schaltstellung des Wegeventils 4 angezeigt wird. Je nach Füllstand eines jeweiligen Milchbehälters 1 oder 1' wird bei einer gleichen Pumpenleistung mehr Milch abgesogen, wenn diese voll sind bzw. weniger, wenn der oder die Behälter nahezu leer sind. Daher wird entsprechend mehr oder weniger Luft zugeführt, damit dies verhältnismässig zur geförderten Milch gleich bleibt.

Als weiterer Parameter zum Einstellen des Sollwertgebers 9 dient auch die Temperatur des Milchschaums. Hierfür steht das Wegeventil 26 mit dem Sollwertgeber 9 über eine Leitung 14 in Verbindung, durch welche ihm der jeweilige Betriebszustand "kalter oder warmer Milchschaum" angezeigt wird.

Beim beschriebenen Ausführungsbeispiel wird der Sollwertgeber 9 auch in Abhängigkeit vom momentanen Stromverbrauch der Pumpe 3 über die Leitung 32 eingestellt. Die Strommenge steht mitunter in Abhängigkeit zur Konsistenz des zubereiteten Milchschaums, da die Pumpe bei einer dichteren Konsistenz mehr Arbeit für die gleiche Mengenleistung verrichten muss. Auf diese Weise ist es möglich, über die Motorenstromleitung 18 der Pumpe die Schaumkonsistenz zu regulieren und sie je nach Art des zu verarbeitenden Produkts, etwa Cappuccino, Latte Macchiato, Milchkaffee oder beispielsweise ein Schokoladengetränk zu programmieren.

Die beschriebene Vorrichtung ist zwar als Bestandteil einer automatischen Kaffeemaschine konzipiert. Sie kann aber auch ohne weiteres als selbständiges Gerät arbeiten, oder sie kann auch nachträglich in vorhandene Maschinen eingebaut werden.

Die erfindungsgemässe Vorrichtung zeichnet sich dadurch aus, dass sie apparativ einfach ist, und dass bei ihr keine Handeinstellung der Luftzufuhrmenge nötig ist, weil sie selbsttätig unter Heranziehung der massgeblichen Parameter eingestellt wird. Diese können von Fall zu Fall je nach Einsatzbedingungen ausgewählt werden.

Selbstverständlich könnte diese Regelung durch unterschiedliche Varianten erfolgen. So könnte anstelle eines Proportional- oder Dosierventils als Regelorgan beispielsweise auch ein Klappenventil oder dergleichen verwendet werden.

Anstelle einer Pumpe 3 bzw. einer Drosselstelle 22 für das Ansaugen der Milch könnte auch ein Ansaugen mittels dem bewährten Venturi-System mit Dampfzuführung oder ähnlichem verwendet werden.

Je nach Verwendung einer erfindungsgemässen Vorrichtung oder Kaffeemaschine kann ein oder mehrere Parameter für die Sollwerteinstellung/en zweckmässig sein.

Die Erfindung ist mit den oben erläuterten Ausführungsbeispielen ausreichend dargetan. Sie könnte aber selbstverständlich noch durch weitere Varianten erläutert sein. So könnten auch mehrere Sensoren beispielsweise bei jedem der beiden Leitungsabschnitte 23a, 23b je einer vorgesehen sein.

Im Prinzip könnte die Veränderung der Konsistenz des erzeugten Milchschaums auch durch mechanische Mittel, zum Beispiel durch die Verwendung von unterschiedlichen Drosselungen bei der Drosselstelle durch ein verstellbares Ventil oder durch Veränderung der Pumpendrehzahl erzielt werden.

## Patentansprüche

1. Verfahren zum Erzeugen von Milchschaum, insbesondere für die Zubereitung milchschaumhaltiger Getränke bei einer Kaffeemaschine, wobei der mittels einer Pumpe (3) beförderten Milch ein gasförmiges Medium, insbesondere Luft, zugeführt werden kann und das gebildete Milch/Luft-Gemisch zu einem Auslass (24) für Milchschaum oder milchschaumhaltige Getränke gefördert wird, wobei der erzeugte Milchschaum eine bestimmte Konsistenz aufweist, welche durch einen Regelvorgang kontrolliert wird und/oder durch Einstellung verändert werden kann, wobei als Parameter zum Einstellen eines Sollwertgebers (9) die Temperatur des Milchschaums dient, **dadurch gekennzeichnet, dass** die Konsistenz des erzeugten Milchschaums ermittelt und durch den Regelvorgang kontrolliert wird und/oder durch diese Einstellung verändert werden kann, wobei dies durch Veränderung der Pumpendrehzahl erzielt wird.

2. Verfahren nach Anspruch 1, **dadurch gekennzeichnet, dass** dass beim Regelvorgang die Konsistenz des erzeugten Milchschaums ermittelt und bei Abweichung von einem Sollwert durch eine Steuerung der Luftzufuhrmenge auf diesen verändert wird.

3. Verfahren nach Anspruch 1 oder 2, **dadurch gekennzeichnet, dass** die Konsistenz des erzeugten Milchschaums auf unterschiedliche Werte eingestellt werden kann.

4. Verfahren nach einem der vorhergehenden Ansprüche 1 bis 3, **dadurch gekennzeichnet, dass**
die Konsistenz durch Messen elektrischer Eigenschaften des Milchschaums beim Durchfliessen vor dem Auslass (24) ermittelt wird.

5. Verfahren nach einem der vorhergehenden Ansprüche 1 bis 4, **dadurch gekennzeichnet, dass**
die Milch durch eine Pumpe (3) gefördert wird und die Konsistenz des Milchschaums durch Messen des Stromverbrauchs der Pumpe bei gesteuerter gleicher Drehzahl derselben ermittelt wird, wobei bei steigender Konsistenz der Förderwiderstand des Milchschaums und damit der Stromverbrauch der Pumpe zunimmt, und umgekehrt.

6. Verfahren nach einem der vorhergehenden Ansprüche 1 bis 5, **dadurch gekennzeichnet, dass**
die Konsistenz des erzeugten Milchschaums durch Steuerung der Luftzufuhrmenge veränderbar bzw. einstellbar ist.

7. Verfahren nach einem der vorhergehenden Ansprüche 1 bis 5, **dadurch gekennzeichnet, dass**
die Konsistenz des erzeugten Milchschaums hinsichtlich seines Luftanteils pro Volumen gemessen und durch eine Steuerung der Luftzufuhrmenge veränderbar ist.

8. Verfahren nach einem der vorhergehenden Ansprüche 1 bis 7, **dadurch gekennzeichnet, dass**
die Luftzufuhrmenge mit einem einstellbaren Sollwert geregelt wird, welcher in Abhängigkeit von einem oder mehreren Parametern veränderbar ist.

9. Verfahren nach Anspruch 8, **dadurch gekennzeichnet, dass**
der Sollwert der Luftzufuhrmenge in Abhängigkeit der verwendeten Milchsorte und/oder dem Füllstand eines Milchvorratsbehälters (1,1) und/oder der Milchtemperatur darin als Parameter einstellbar ist.

10. Verfahren nach Anspruch 8 oder 9, **dadurch gekennzeichnet, dass** der Sollwert der Luftzufuhrmenge in Abhängigkeit von der Konsistenz des zu erzeugenden Milchschaums als Parameter einstellbar ist.

11. Vorrichtung zum Erzeugen von Milchschaum, insbesondere für die Zubereitung milchschaumhaltiger Getränke bei einer Kaffeemaschine, zur Durchführung des Verfahrens nach einem der vorhergehenden Ansprüche 1 bis 10, wobei der mittels einer Pumpe (3) beförderten Milch ein gasförmiges Medium, insbesondere Luft, zuführbar ist und ein Auslass (24) für Milchschaum oder milchschaumhaltige Getränke vorgesehen ist, wobei der erzeugte Milchschaum eine bestimmte Konsistenz aufweist, welche durch einen Regelvorgang kontrollierbar und/oder durch Einstellung veränderbar ist, wobei als Parameter zum Einstellen eines Sollwertgebers (9) die Temperatur des Milchschaums dient, **dadurch gekennzeichnet, dass**
für die Einstellung der Konsistenz des erzeugten Milchschaums eine Schaltung und/oder bei einem Regelvorgang mindestens ein die Konsistenz ermittelnder Sensor (31) als Istwertgeber für einen Regelkreis (35) mit einem Sollwertgeber (33) vorgesehen ist.

12. Vorrichtung nach Anspruch 11, **dadurch gekennzeichnet, dass**
der jeweilige Sensor (31) derart ausgebildet ist, dass mit ihm die Konsistenz durch Messen elektrischer Eigenschaften des Milchschaums beim Durchfliessen durch eine Leitung (23) vor dem Auslass (24) ermittelbar ist, wobei dies durch eine kapazitive Messung oder einer Widerstandsmessung erfolgen kann.

13. Vorrichtung nach Anspruch 11 oder 12, **dadurch gekennzeichnet, dass**
bei der Pumpe (3) für die Förderung der Milch ein via eine Leitung (18) mit einem Regelkreis (16) verbundener Sensor für das Messen des Stromverbrauchs integriert ist.

14. Vorrichtung nach Anspruch 11, **dadurch gekennzeichnet, dass** für die Zufuhrmengenregulierung des gasförmigen Mediums, insbesondere Luft, ein Luftmengenregler vorgesehen ist, der sich aus einem Sollwertgeber (9), einem Flussmengen-Messgerät (10), einem Istwertgeber (11), einem den Istwert mit dem Sollwert vergleichenden Signalgeber (12), einem von ihm betätigbaren Regelorgan (15) zum gedrosselten oder vollen Öffnen bzw. Schliessen der Luftzufuhrleitung (6) zusammensetzt.

15. Vorrichtung nach Anspruch 14, **dadurch gekennzeichnet, dass** das Regelorgan (15) als Proportional- oder Dosierventil ausgebildet ist, wobei der Sollwertgeber (9) durch ein Programm für verschiedene Sollwerteinstellungen für den Sollwertgeber (9) im Regelkreis (8) der Luftmengenregulierung einstellbar ist.

16. Vorrichtung nach Anspruch 14 oder 15, **dadurch gekennzeichnet, dass**
der Sollwertgeber (9) des Luftmengenreglers (8) durch ein die Milchschaumbeheizung (27) steuerndes Ventil (26) verstellbar ist.

17. Vorrichtung nach Anspruch 14, **dadurch gekennzeichnet, dass** die Pumpe (3) für das Fördern der Milch aus einem Vorratsbehälter (1,1') oder dergleichen vorgesehen und das Medium, insbesondere Luft, zuführbar ist, wobei der Sollwertgeber (9) des Luftmengenreglers (8) in Abhängigkeit des Stromverbrauchs bei gesteuerter gleicher Drehzahl der Pumpe (3) als Wert für die Konsistenz des Milchschaums einstellbar ist.

18. Kaffeemaschine mit einer Vorrichtung nach einem der vorhergehenden Ansprüche 11 bis 17, **dadurch gekennzeichnet, dass** eine Schaltung für verschiedene Sollwerteinstellungen je nach gewünschter Milchschaumkonsistenz entsprechend der Art des herzustellenden Getränks vorgesehen ist.

19. Kaffeemaschine nach Anspruch 18, **dadurch gekennzeichnet, dass** der Milchvorratsbehälter (1,1') mit einer Milchsortenanzeige und/oder einer Füllstandanzeige (28) zum Einstellen des Sollwertgebers (9) versehen ist.

20. Kaffeemaschine nach Anspruch 18 oder 19, **dadurch gekennzeichnet, dass**
der jeweilige Mahlgrad wenigstens einer Kaffeemühle durch eine Steuerung einstellbar ist, wobei der jeweilige Mahlgrad als Parameter zum Einstellen des Sollwertgebers (9) im Regelkreis (8) der Luftmengenregulierung dient.

## Claims

1. A method for producing milk foam, in particular for the preparation of drinks that contain milk foam in a coffee machine, a gaseous medium, in particular air, being able to be delivered to the milk being conveyed by a pump (3), and the milk/air mixture that is formed being conveyed to an outlet (24) for milk foam or drinks containing milk foam, the milk foam that is produced having a specific consistency, which is determined and is monitored by a regulating process and/or can be changed by adjusting, whereby the temperature of the milk foam serves as parameter for the adjustment of the target value sensor (9), **characterised in that** the consistency of the milk foam that is produced is determined and is monitored by the regulating process and/or can be changed by this adjustment, whereby this is achieved by changing the pump speed.

2. The method according to Claim 1, **characterised in that** during the regulating process the consistency of the milk foam that is produced is determined, and if it deviates from a target value it is changed to this value by controlling the amount of air that is supplied.

3. The method according to Claim 1 or 2, **characterised in that** the consistency of the milk foam that is produced can be set to different values.

4. The method according to any of the preceding Claims 1 to 3, **characterised in that**
the consistency is determined by measuring electrical properties of the milk foam as it flows through before the outlet (24).

5. The method according to any of the preceding Claims 1 to 4, **characterised in that**
the milk is conveyed through a pump (3) and the consistency of the milk foam is determined by measuring the power consumption of the pump at the controlled same speed, the conveyance resistance of the milk foam, and so the power consumption of the pump, increasing as the consistency increases, and vice versa.

6. The method according to any of the preceding Claims 1 to 5, **characterised in that**
the consistency of the milk foam that is produced can be changed or set by controlling the amount of air that is supplied.

7. The method according to any of the preceding Claims 1 to 5, **characterised in that**
the consistency of the milk foam that is produced is measured as regards its percentage of air by volume and can be changed by controlling the amount of air supplied.

8. The method according to any of the preceding Claims 1 to 7, **characterised in that**
the amount of air supplied is regulated with an adjustable target value that can be changed dependently upon one or more parameters.

9. The method according to Claim 8, **characterised in that** the target value of the amount of air supplied can be set as a parameter dependently upon the type of milk used and/or the filling level of the milk storage container (1,1) and/or the milk temperature therein.

10. The method according to Claim 8 or 9, **characterised in that** the target value of the amount of air supplied can be set as a parameter dependently upon the consistency of the milk foam that is to be produced.

11. An apparatus for producing milk foam, in particular for the preparation of drinks that contain milk foam in a coffee machine, for implementing the method according to any of the preceding Claims 1 to 10, whereby a gaseous medium, in particular air, being able to be delivered to the milk being conveyed by a pump (3), and an outlet (24) for the milk foam or drinks containing milk foam is provided, whereby the milk foam that is produced having a specific consistency, which can be monitored by a regulating process and/or changed by adjusting, whereby the temperature of the milk foam serves as parameter for the adjustment of a target value sensor (9), **characterised in that**
a circuit for the adjustment of the consistency of the milk foam that is produced and/or in a regulating process at least one sensor (31) is provided determining the consistency as an actual value sensor for a regulating circuit (35) with a target value sensor (33).

12. The apparatus according to Claim 11, **characterised in that** the respective sensor (31) is designed such that it can be used to determine the consistency by measuring electrical properties of the milk foam as it flows through a line (23) before the outlet (24), this being able to take place by means of a capacitive measurement or a resistance measurement.

13. The apparatus according to Claim 11 or 12, **characterised in that** with the pump (3) for conveying the milk a sensor for measuring the power consumption is integrated that is connected to a regulating circuit (16) via a line (18).

14. The apparatus according to Claim 11, **characterised in that** in order to regulate the amount of gaseous medium, in particular air, supplied, an air quantity regulator is provided that is composed of a target value sensor (9), a flow volume measuring device (10), an actual value sensor (11), a signal transmitter (12) that compares the actual value and the target value, a regulating element (15) that can be actuated by the latter for throttled or full opening or closure of the air supply line (6).

15. The apparatus according to Claim 14, **characterised in that** the regulating element (15) is in the form of a proportional or metering valve, wherey the target value sensor (9) being able to be set by a programme for different target value settings for the target value sensor (9) in the regulating circuit (8) of the air quantity regulating system.

16. The apparatus according to Claim 14 or 15, **characterised in that** the target value sensor (9) of the air quantity regular (8) can be adjusted by a valve (26) that controls the heating (27) of the milk foam.

17. The apparatus according to Claim 14, **characterised in that** the pump (3) is provided for conveying the milk from a supply container (1, 1') or the like, and the medium, in particular air, can be delivered, the target value sensor (9) of the air quantity regulator (8) being able to be set as a value for the consistency of the milk foam dependently upon the power consumption with the controlled same speed of the pump (3).

18. A coffee machine comprising an apparatus according to any of the preceding Claims 11 to 17, **characterised in that**
a circuit for different target value settings depending on the desired milk foam consistency according to the type of drink to be produced is provided.

19. The coffee machine according to Claim 18, **characterised in that** the milk storage container (1, 1') is provided with a milk type display and/or a filling level display (28) for the setting of the target value sensor (9).

20. The coffee machine according to Claim 18 or 19, **characterised in that**
the respective degree of grinding of at least one coffee mill can be set by a control system, the respective degree of grinding serving as a parameter for setting the target value sensor (9) within the regulating circuit (8) of the air quantity regulating system.

## Revendications

1. Procédé de production de mousse de lait, en particulier pour la préparation de boissons contenant de la mousse de lait dans une machine à café, dans lequel un milieu gazeux, en particulier de l'air, peut être apporté au lait, transporté au moyen d'une pompe (3), et on transporte le mélange lait/air formé à une sortie (24) de mousse de lait ou d'une boisson contenant de la mousse de lait, dans lequel la mousse de lait produite a une consistance déterminée, qui est réglée par une opération de réglage et/ou qui peut être modifiée par réglage, dans lequel la température de la mousse de lait sert de paramètre pour le réglage d'un prescripteur (9) de valeur de consigne, **caractérisé en ce que**
l'on détermine la consistance de la mousse de lait produite et on la règle par l'opération de réglage et/ou elle peut être modifiée par ce réglage, dans lequel on obtient cela par variation de la vitesse de rotation de la pompe.

2. Procédé suivant la revendication 1, **caractérisé en ce que**, lors de l'opération de réglage, on détermine la consistance de la mousse de lait produite et si elle s'écarte d'une valeur de consigne, on la met à celle-ci par une commande de la quantité d'apport d'air.

3. Procédé suivant la revendication 1 ou 2, **caractérisé en ce que**
la consistance de la mousse de lait produite peut être réglée à des valeurs différentes.

4. Procédé suivant l'une des revendications 1 à 3 précédentes, **caractérisé en ce que**
l'on détermine la consistance par mesure de propriétés électriques de la mousse de lait, lorsqu'elle passe devant la sortie (24).

5. Procédé suivant l'une des revendications 1 à 4 précédentes, **caractérisé en ce que**
l'on transporte le lait par une pompe (3) et on détermine la consistance de la mousse de lait par mesure de la consommation de courant de la pompe à même vitesse de rotation réglée de celle-ci, dans lequel, si la consistance augmente, la résistance au transport de la mousse de lait et ainsi la consommation de courant de la pompe augmente et inversement.

6. Procédé suivant l'une des revendications 1 à 5 précédentes, **caractérisé en ce que**
la consistance de la mousse de lait produite peut être modifiée ou réglée par commande de la quantité d'apport d'air.

7. Procédé suivant l'une des revendications 1 à 5 précédentes, **caractérisé en ce que**
la consistance de la mousse de lait produite est mesurée en ce qui concerne sa proportion d'air par volume et peut être modifiée par une commande de la quantité d'apport d'air.

8. Procédé suivant l'une des revendications 1 à 7 précédentes, **caractérisé en ce que**
l'on règle la quantité d'apport d'air par une valeur de consigne réglable, qui peut être modifiée en fonction d'un ou de plusieurs paramètres.

9. Procédé suivant la revendication 8, **caractérisé en ce que** la valeur de consigne de la quantité d'apport d'air est réglable en fonction des types de lait utilisés et/ou du niveau d'un réservoir (1,1) de lait et/ou de la température du lait, qui s'y trouve comme paramètre.

10. Procédé suivant la revendication 8 ou 9, **caractérisé en ce que**
la valeur de consigne de la quantité d'apport d'air est réglable, en fonction de la consistance de la mouse de lait à produire comme paramètre.

11. Dispositif de production de mousse de lait, en particulier pour la préparation de boissons contenant de la mousse de lait dans une machine à café, pour effectuer le procédé suivant l'une des revendications 1 à 10 précédentes, dans lequel un milieu gazeux, en particulier de l'air, peut être apporté au lait transporté au moyen d'une pompe (3) et une sortie (24) pour la mousse de lait ou des boissons contenant de la mousse de lait est prévue, dans lequel la mousse de lait produite a une consistance déterminée, qui peut être réglée par une opération de réglage et/ou être modifiée par réglage, dans lequel la température de la mousse de lait sert de paramètre pour le réglage d'un prescripteur (9) de valeur de consigne, **caractérisé en ce que**
pour le réglage de la consistance de la mousse de lait produite, il est prévu un circuit et/ou lors d'une opération de réglage, au moins un capteur (31) déterminant la consistance comme transmetteur de valeur réelle pour un circuit (35) de réglage ayant un prescripteur (33) de valeur de consigne.

12. Dispositif suivant la revendication 11, **caractérisé en ce que**
le capteur (31) respectif est constitué de manière à pouvoir, par lui, déterminer la consistance par mesure de propriétés électriques de la mousse de lait lors du passage dans un conduit (23) devant la sortie (24), cela pouvant s'effectuer par une mesure capacitive ou une mesure de résistance.

13. Dispositif suivant la revendication 11 ou 12, **caractérisé en ce qu'**
il est intégré à la pompe (3) de transport du lait un capteur, relié par une ligne (18) à un circuit (16) de réglage, de mesure de la consommation de courant.

14. Dispositif suivant la revendication 11, **caractérisé en ce qu'**
il est prévu pour la régulation de la quantité d'apport du milieu gazeux, en particulier de l'air, un régleur de la quantité d'air, qui se compose d'un prescripteur (9) de valeur de consigne, d'un appareil (10) de mesure de débit, d'un transmetteur (11) de valeur réelle, d'un transmetteur (12) de signal comparant la valeur réelle à la valeur de consigne, d'un organe (15) de réglage, par lui actionnable, pour l'ouverture étranglée ou complète et la fermeture du conduit (6) d'apport d'air.

15. Dispositif suivant la revendication 14, **caractérisé en ce que**
l'organe (15) de réglage est constitué sous la forme d'une soupape proportionnelle ou d'une soupape de dosage, dans lequel le prescripteur (9) de valeur de consigne est réglable par un programme pour divers réglages de valeur de consigne du prescripteur (9) de valeur de consigne dans le circuit (8) de réglage de la régulation de la quantité d'air.

16. Dispositif suivant la revendication 14 ou 15, **caractérisé en ce que**
le prescripteur (9) de valeur de consigne du régleur (8) de la quantité d'air est réglable par une soupape (26) commandant le chauffage (27) de la mousse de lait.

17. Dispositif suivant la revendication 14, **caractérisé en ce que**
la pompe (3) est prévue pour le transport du lait à partir d'un réservoir (1,1') ou analogue et le milieu, en particulier de l'air, peut être apporté, dans lequel le prescripteur (9) de valeur de consigne du régleur (8) de la quantité d'air est réglable en fonction de la consommation de courant à même vitesse de rotation commandée de la pompe (3) comme valeur de la consistance de la mousse de lait.

18. Machine à café ayant un dispositif suivant l'une des revendications 11 à 17 précédentes, **caractérisé en ce qu'** il est prévu un circuit pour divers réglages de valeur de consigne suivant la consistance souhaitée de la mousse de lait en correspondance au type de la boisson à préparer.

19. Machine à café suivant la revendication 18, **caractérisé en ce que**
le réservoir (1,1') à lait est pourvu d'une indication du type de lait et/ou d'une indication (28) de niveau pour le réglage du prescripteur (9) de la valeur de consigne.

20. Machine à café suivant la revendication 18 ou 19, **caractérisé en ce que**
le degré de broyage respectif d'au moins un moulin à café est réglable par une commande, dans lequel le degré de broyage respectif sert de paramètre pour le réglage du prescripteur (9) de valeur de consigne dans le circuit (8) de réglage de la régulation de la quantité d'air.
